# EUROPEAN PATENT APPLICATION

(11) **EP 4 290 486 A1**
(43) Date of publication of application: **13.12.2023**
(21) Application number: 23167964.8
(22) Date of filing: 14.04.2023
(51) Int. Cl.: G07C 5/00, G07C 5/08

(54) **DRIVING DIAGNOSTIC DEVICE, DRIVING DIAGNOSTIC SYSTEM, AND DRIVING DIAGNOSTIC METHOD**

(30) Priority: 10.06.2022 JP 2022094685
(71) Applicant: TOYOTA JIDOSHA KABUSHIKI KAISHA, Aichi-Ken 471-8571 (JP)
(72) Inventor: ENDO, Masato, Toyota-shi, 471-8571 (JP); MANABE, Shuhei, Toyota-shi, 471-8571 (JP)
(74) Representative: J A Kemp LLP

(57) **Abstract**

A driving diagnostic device including an information acquisition section configured to acquire vehicle related information related to a vehicle, and a transmission section configured to wirelessly transmit the vehicle related information to a first driving diagnostic section that is provided not in the vehicle and that is configured to perform a first driving diagnosis of the vehicle using the vehicle related information acquired from the information acquisition section, and configured to transmit the vehicle related information to a second driving diagnostic section that is provided in the vehicle and that performs a second driving diagnosis of the vehicle using the vehicle related information acquired from the information acquisition section, by utilizing a network of the vehicle. A transmission destination of the vehicle related information by the transmission section is decided among the first driving diagnostic section and the second driving diagnostic section based on a mode of the first driving diagnosis and the second driving diagnosis.

## Description

### BACKGROUND

### Technical Field

The present disclosure relates to a driving diagnostic device, a driving diagnostic system, and a driving diagnostic method.

### Related Art

A vehicle remote diagnostic system capable of performing a malfunction diagnosis that takes into account the wishes and demands of a driver of a vehicle is disclosed in Japanese Patent Application Laid-Open (JP-A) No. 2002-335340.

There is a need for vehicle related information to be acquired from a vehicle to perform a driving diagnosis of the vehicle. There is room for improvement in JP-A No. 2002-335340 in relation to a method for transmitting the vehicle related information to an entity for performing a driving diagnosis.

In consideration of the above circumstances, an object of the present disclosure is to obtain a driving diagnostic device, a driving diagnostic system, and a driving diagnostic method capable of transmitting vehicle related information to plural driving diagnostic sections, while considering various conditions related to driving diagnostics.

### SUMMARY

A driving diagnostic device of a first aspect includes an information acquisition section configured to acquire vehicle related information related to a vehicle, and a transmission section configured to wirelessly transmit the vehicle related information to a first driving diagnostic section that is provided not in the vehicle and that is configured to perform a first driving diagnosis of the vehicle using the vehicle related information acquired from the information acquisition section, and configured to transmit the vehicle related information to a second driving diagnostic section that is provided in the vehicle and that performs a second driving diagnosis of the vehicle using the vehicle related information acquired from the information acquisition section, by utilizing a network of the vehicle. A transmission destination of the vehicle related information by the transmission section is decided among the first driving diagnostic section and the second driving diagnostic section based on a mode of the first driving diagnosis and the second driving diagnosis.

In the driving diagnostic device of the first aspect, the information acquisition section acquires the vehicle related information related to the vehicle. The vehicle related information acquired by the information acquisition section is able to be wirelessly transmitted by the transmission section to a first driving diagnostic section that is provided not in the vehicle and is able to be transmitted to the second driving diagnostic section provided in the vehicle utilizing a network of the vehicle. The first driving diagnostic section performs the first driving diagnosis of the vehicle using the vehicle related information, and the second driving diagnostic section performs the second driving diagnosis of the vehicle using the vehicle related information. Furthermore, the transmission section decides whether to transmit the vehicle related information to the first driving diagnostic section or the second driving diagnostic section based on the mode of the first driving diagnosis and the second driving diagnosis. Such a driving diagnostic device of the first aspect is able to transmit the vehicle related information to plural driving diagnostic sections while taking into consideration various conditions related to driving diagnostics.

A driving diagnostic device according to a second aspect is the first aspect, wherein the transmission destination of the vehicle related information by the transmission section is decided among the first driving diagnostic section and the second driving diagnostic section based on at least one of a classification of an output destination of result information of the first driving diagnosis and the second driving diagnosis, a classification of the result information, or a classification of the vehicle related information.

In the second aspect, the transmission section decides whether to transmit the vehicle related information to the first driving diagnostic section or to the second driving diagnostic section based on at least one of the classification of an output destination of result information of the first driving diagnosis and the second driving diagnosis, the classification of the result information, or the classification of the vehicle related information. The driving diagnostic device of the second aspect is accordingly able to transmit the vehicle related information to plural driving diagnostic sections while taking into consideration various conditions related to driving diagnostics.

The driving diagnostic device according to a third aspect is the second aspect, wherein the transmission section transmits the vehicle related information required for the second driving diagnosis to the second driving diagnostic section, the output destination of the result information of the second driving diagnosis being a display provided at the vehicle.

In the third aspect, the transmission section transmits the vehicle related information required for the second driving diagnosis to the second driving diagnostic section. The output destination of the result information of the second driving diagnosis is a display provided at the vehicle. The result information generated by the second driving diagnostic section can be quickly displayed on the display. An occupant of the vehicle is accordingly able to immediately check result information generated by the second driving diagnostic section by looking at the display.

The driving diagnostic device according to a fourth aspect is the second aspect or the third aspect, wherein the transmission section transmits the vehicle related information required for the first driving diagnosis to the first driving diagnostic section, the output destination of the result information of the first driving diagnosis being a portable terminal capable of communicating wirelessly with the first driving diagnostic section.

In the fourth aspect, the transmission section transmits the vehicle related information required for the first driving diagnosis to the first driving diagnostic section.

The output destination of the result information of the first driving diagnosis is a portable terminal capable of communicating wirelessly with the first driving diagnostic section. The occupant of the vehicle is accordingly able to, for example, use the portable terminal to check result information generated by the first driving diagnostic section after finishing driving the vehicle.

A driving diagnostic device according to a fifth aspect is the second aspect or the third aspect, wherein at least one of the first driving diagnostic section or the second driving diagnostic section is a particular driving diagnostic section capable of executing a driving diagnosis to generate particular result information that is result information for an insurance company to utilize to design an insurance product, the particular driving diagnostic section also being certified by the insurance company.

In the fifth aspect, the transmission section transmits the vehicle related information required for the driving diagnosis to generate the particular result information to the particular driving diagnostic section that is capable of executing a driving diagnosis to generate the particular result information and that is certified by the insurance company. An insurance company that has received the particular result information from the particular driving diagnostic section is accordingly able to design an insurance product based on reliable particular result information.

The driving diagnostic device according to a sixth aspect is the second aspect or the third aspect, wherein the first driving diagnostic section is capable of executing the first driving diagnosis with machine learning, and the transmission section transmits the vehicle related information required for the first driving diagnosis with the machine learning to the first driving diagnostic section.

In the sixth aspect, the transmission section transmits the vehicle related information required for the first driving diagnosis with machine learning to the first driving diagnostic section capable of executing the first driving diagnosis with machine learning. The first driving diagnostic section is accordingly able to execute the driving diagnosis with machine learning based on the received vehicle related information.

A driving diagnostic device according to a seventh aspect is the first aspect or the second aspect, wherein the transmission section transmits the vehicle related information to the second driving diagnostic section, the vehicle related information being acquired by the information acquisition section at an acquisition frequency of a first threshold or higher.

In the seventh aspect, the transmission section transmits the vehicle related information to the second driving diagnostic section. This vehicle related information is acquired by the information acquisition section at an acquisition frequency of a first threshold or higher. This accordingly enables a high volume of vehicle related information to be suppressed from being wirelessly transmitted from the vehicle to the first driving diagnostic section.

A driving diagnostic device according to an eighth aspect is the first aspect or the second aspect, wherein the transmission section transmits some result information of the second driving diagnosis to the first driving diagnostic section.

In the eighth aspect, some result information generated by the second driving diagnostic section is transmitted by the transmission section to the first driving diagnostic section. Thus, for example, duplication of the same driving diagnosis from being performed by the first driving diagnostic section and the second driving diagnostic section can be prevented.

A driving diagnostic system according to a ninth aspect includes an information acquisition section configured to acquire vehicle related information related to a vehicle, a first driving diagnostic section provided not in the vehicle and configured to perform a first driving diagnosis of the vehicle using the vehicle related information acquired from the information acquisition section, a second driving diagnostic section provided at the vehicle and configured to execute a second driving diagnosis of the vehicle using the vehicle related information acquired from the information acquisition section, and a transmission section configured to wirelessly transmit the vehicle related information to the first driving diagnostic section and configured to transmit the vehicle related information to the second driving diagnostic section utilizing a network of the vehicle. A transmission destination of the vehicle related information by the transmission section is decided among the first driving diagnostic section and the second driving diagnostic section based on a mode of the first driving diagnosis and the second driving diagnosis.

A driving diagnostic method according to a tenth aspect includes a step of acquiring vehicle related information related to a vehicle, a step of deciding whether: the vehicle related information should be wirelessly transmitted to a first driving diagnostic section that is provided not in the vehicle and that is configured to perform a first driving diagnosis of the vehicle using the vehicle related information, or the vehicle related information should be transmitted to a second driving diagnostic section that is configured to perform a second driving diagnosis of the vehicle using the vehicle related information, by utilizing a network of the vehicle, based on a mode of the first driving diagnosis and the second driving diagnosis; and a step of transmitting the vehicle related information to at least one of the first driving diagnostic section that has been decided to be a transmission destination of the vehicle related information or the second driving diagnostic section that has been decided to be a transmission destination of the vehicle related information.

As explained above, the driving diagnostic device, the driving diagnostic system, and the driving diagnostic method according to the present disclosure exhibit the excellent advantageous effect of enabling vehicle related information to be to transmitted to plural driving diagnostic sections while taking into consideration various conditions related to driving diagnostics.

### BRIEF DESCRIPTION OF THE DRAWINGS

Exemplary embodiments of the present disclosure will be described in detail based on the following figures, wherein:
Fig. 1 is an overall diagram of a driving diagnostic system according to the present exemplary embodiment;
Fig. 2 is a control block diagram of an ECU of the vehicle and of the external server illustrated in Fig. 1;
Fig. 3 is a functional block diagram of the ECU;
Fig. 4 is a diagram illustrating a data classification list;
Fig. 5 is a diagram illustrating a display of the vehicle;
Fig. 6 is a functional block diagram of the external server;
Fig. 7 is a functional block diagram of a portable terminal illustrated in Fig. 1;
Fig. 8 is a flowchart illustrating processing executed by the ECU of the vehicle;
Fig. 9 is a flowchart illustrating processing executed by the external server;
Fig. 10 is a flowchart illustrating processing executed by the portable terminal; and
Fig. 11 is a diagram illustrating a display of the portable terminal.

### DETAILED DESCRIPTION

Description follows regarding exemplary embodiments of a driving diagnostic device, a driving diagnostic system (hereafter referred to as system), and a driving diagnostic method of the present disclosure, with reference to the drawings.

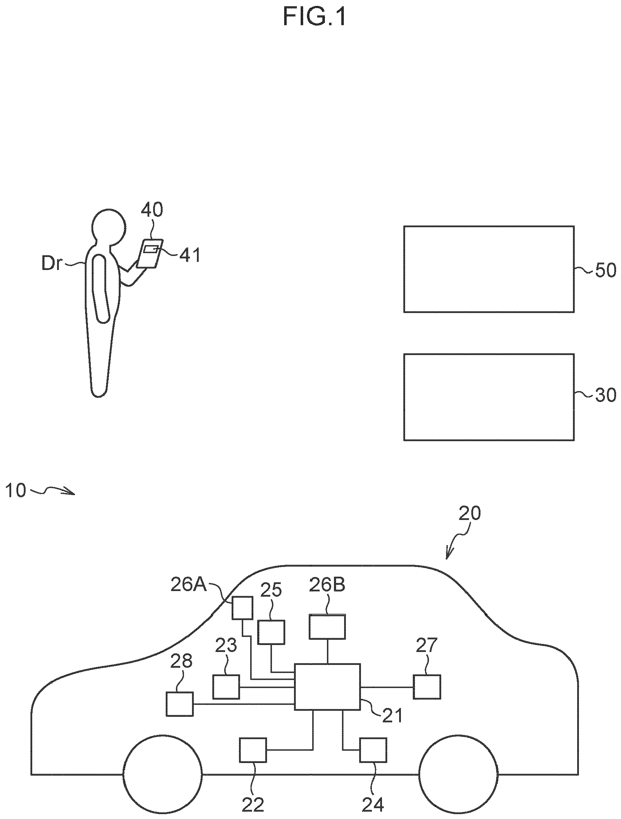

As illustrated in Fig. 1, a system 10 of the present exemplary embodiment includes a vehicle 20, an external server (computer) (first driving diagnostic section) (particular driving diagnostic section) 30, a portable terminal 40, and a server 50.

A vehicle 20 having data communication capabilities with the external server 30, the portable terminal 40, and the server 50 over a network includes, as illustrated in Fig. 1, an electronic control unit (ECU) (second driving diagnostic section) (driving diagnostic device) 21, a wheel speed sensor 22, an accelerator position sensor 23, a brake force sensor 24, a steering angle sensor 25, a forward looking camera 26A, a vehicle interior camera 26B, a global positioning system (GPS) receiver 27, and a display 28. Wheel speed sensors 22, the accelerator position sensor 23, the brake force sensor 24, the steering angle sensor 25, the forward looking camera 26A, the vehicle interior camera 26B, the GPS receiver 27, and the display 28 are connected to the ECU 21. Note that in the following description the wheel speed sensors 22, the accelerator position sensor 23, the brake force sensor 24, the steering angle sensor 25, the forward looking camera 26A, the vehicle interior camera 26B, and the GPS receiver 27 will be referred to collectively as an "information acquisition section".

There are four of the wheel speed sensors 22 provided in the vehicle 20. The wheel speed sensors 22 respectively detect the wheel speed of each of the four wheels. The accelerator position sensor 23 detects the accelerator position. The brake force sensor 24 detects the brake force input by a driver Dr to the brake pedal (omitted from illustration). The steering angle sensor 25 detects a steering angle of a steering wheel (omitted from illustration). The forward looking camera 26A acquires vehicle surroundings image data that is image data of a scene in front of the vehicle 20. The vehicle interior camera 26B acquires face image data that is image data of a face of the driver Dr sat in a driving seat (omitted from illustration) in the vehicle 20. The GPS receiver 27 acquires information related to the position where the vehicle 20 is traveling (hereafter referred to as "position data") by receiving GPS signals transmitted from GPS satellites. Acquired data that the information acquisition section has acquired each time a specific period of time elapsed is sent to the ECU 21 over an onboard network provided to the vehicle 20, and is saved in storage 21D, described later, of the ECU 21 while being associated with time stamp information. Note that the onboard network is, for example, a controller area network (CAN). In the following description the acquired data acquired by the information acquisition section is sometimes referred to collectively as "vehicle related information". Moreover, the information acquisition section of the present exemplary embodiment acquires each set of acquisition data at a first frequency that is a frequency of a first threshold or higher. The first threshold is, for example, 1/100 of a second.

The display 28 provided to an instrument panel (omitted from illustration) of the vehicle 20 is capable of displaying various images.

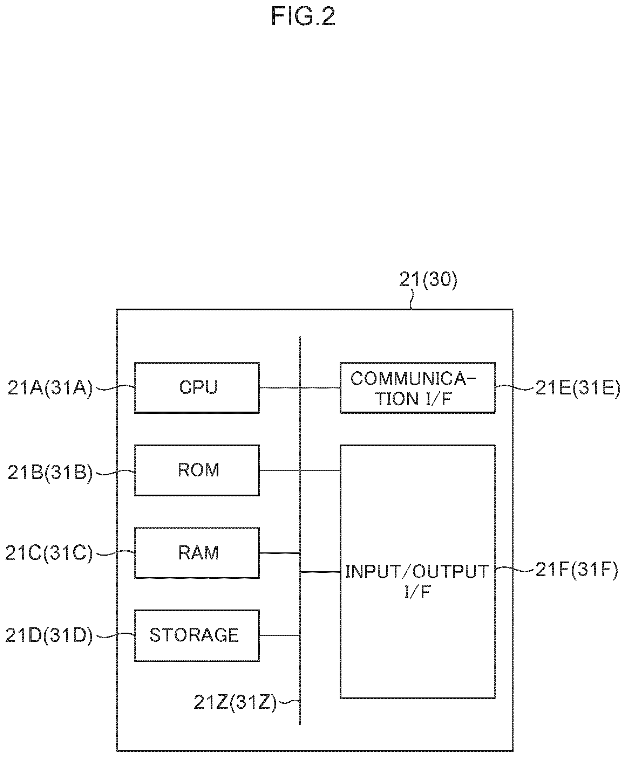

As illustrated in Fig. 2, the ECU (computer) 21 is configured including a central processing unit (CPU: processor) 21A, read only memory (ROM: non-transitory recording medium) 21B, random access memory (RAM) 21C, the storage (non-transitory recording medium) 21D, a communication interface (I/F: transmission section) 21E, and an input/output I/F 21F. The CPU 21A, the ROM 21B, the RAM 21C, the storage 21D, the communication I/F 21E, and the input/output I/F 21F are connected together through a bus 21Z so as to be able to communicate with each other. The CPU 21A is able to acquire information related to the date and time from a timer (omitted from illustration).

The CPU 21A is a central processing unit that executes various programs and controls each section. Namely, the CPU 21A reads a program from the ROM 21B or the storage 21D, and executes the program using the RAM 21C as workspace. The CPU 21A controls each configuration and performs various computation processing (information processing) according to a program recorded on the ROM 21B or the storage 21D.

The ROM 21B stores various programs and various data. The RAM 21C serves as a workspace and temporarily stores programs and/or data. The storage 21D is configured by a storage device such as a hard disk drive (HDD), a solid state drive (SSD), or the like and stores various programs and various data.

The communication I/F 21E is an interface for communicating with various devices. For example, the communication I/F 21E is able to communicate over the onboard network with devices provided to the vehicle 20 other than the ECU 21. Such devices include, for example, the information acquisition section. Furthermore, the communication I/F 21E is able to perform wireless communication with the external server 30, the portable terminal 40, and the server 50 over a network (for example, the Internet).

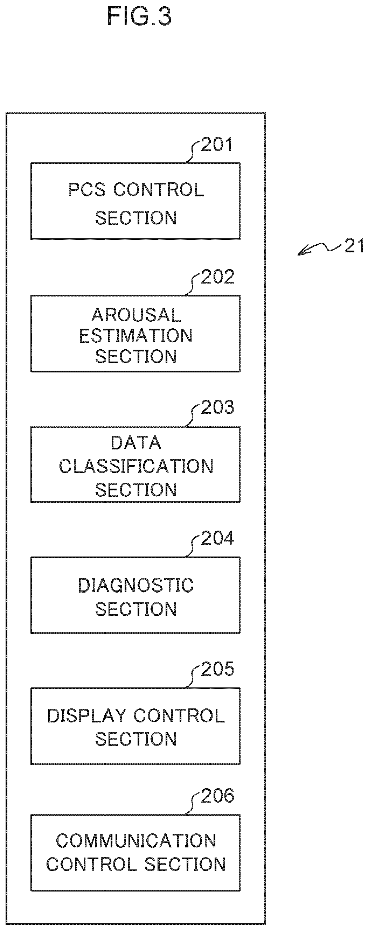

Fig. 3 is a block diagram illustrating an example of a functional configuration of the ECU 21. The ECU 21 includes, as functional configuration, a PCS control section 201, an arousal estimation section 202, a data classification section 203, a diagnostic section 204, a display control section 205, and a communication control section 206. Such functional configuration is implemented by the CPU 21A reading a program stored in the ROM 21B and executing the program.

PCS control section 201 includes a function to control a Pre Crash Safety (PCS) system installed to the vehicle 20. Namely, when a specific condition has been satisfied, the PCS control section 201 controls a brake actuator of a brake device (omitted from illustration) of the vehicle 20 so as to generate a braking force in the brake device.

The arousal estimation section 202 determines an arousal of the driver Dr based on a state of the eyes or the like of the driver Dr as contained in face image data imaged by the vehicle interior camera 26B. In the present specification "arousal" includes an arousal level when a person is awake and a sleep level (sleep depth) when a person is in a sleeping state. The sleep level (sleep depth) is defined in 5 levels. The numerical value of the sleep level (sleep depth) is higher the deeper the sleep of the driver Dr. The arousal estimation section 202 determines that the driver Dr is falling asleep at the wheel when the sleep level is a specific level or higher. Note that an example of the specific level is sleep level 1.

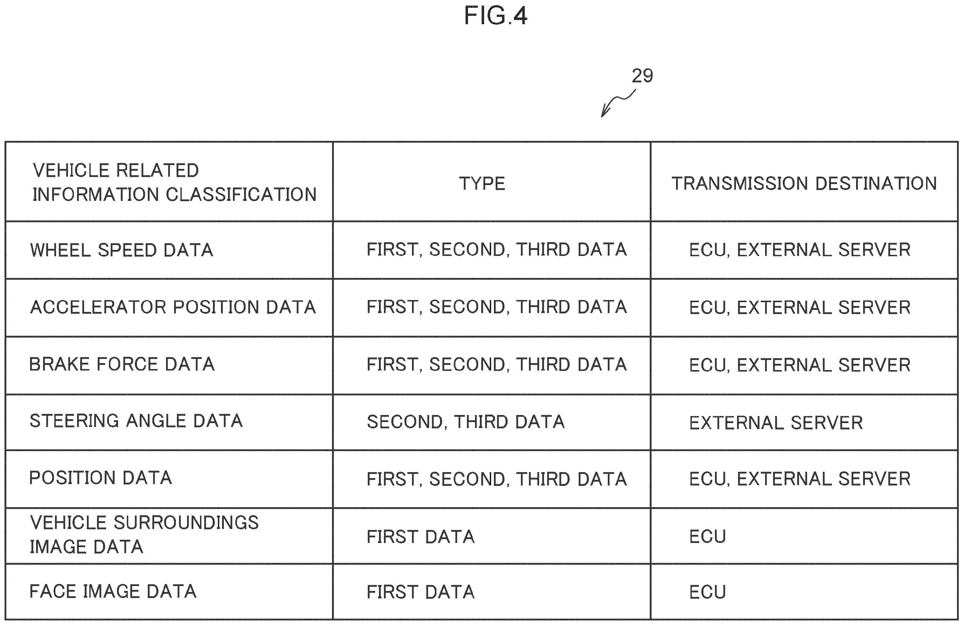

The data classification section 203 classifies the vehicle related information recorded in the storage 21D based on a data classification list 29 illustrated in Fig. 4. The data classification list 29 classifies the vehicle related information into 3 attributes. Namely, the data classification list 29 defines a first data, a second data, and a third data as attributes of vehicle related information. These attributes are set based on each driving diagnostic mode described later. More specifically, these attributes are set based on at least one classification selected from out of the group consisting of a classification of output destination for result information expressing the result of a driving diagnosis, a classification of result information, and a classification of vehicle related information. The output destination for result information is an entity for displaying the result information. For example, the display 28 of the vehicle 20 and a display 41 of the portable terminal 40 each correspond to an output destination for result information. Moreover, real time driving diagnosis (second driving diagnosis), normal driving diagnosis (first driving diagnosis), and insurance-use driving diagnosis (first driving diagnosis) as described later are included as classifications of result information. Furthermore, the data classification list 29 defines a destination for transmission of the vehicle related information. The transmission destination is an entity for performing driving diagnosis using the vehicle related information.

The first data is vehicle related information utilized by the diagnostic section 204 for executing real time driving diagnosis, described later. The second data is vehicle related information utilized by the external server 30 for executing normal driving diagnosis, described later. The third data is vehicle related information that the external server 30 utilizes to execute insurance-use driving diagnosis, described later. As is apparent from Fig. 4, some of the vehicle related information belongs to plural attributes.

The content of the data classification list 29 may be changed using a touch panel (information input section) provided to the display 28. Moreover, a configuration may be adopted in which, when specific information is input to an input device connected to the external server 30, this information is transmitted wirelessly from the external server 30 to the vehicle 20, and the content of the data classification list 29 is changed based on this information. Namely, the content of the data classification list 29 is able to be changed, for example, by an administrator of the external server 30 or by the driver Dr.

The diagnostic section 204 performs driving diagnosis based on data acquired by the wheel speed sensor 22, the accelerator position sensor 23, and the brake force sensor 24. Driving diagnostics methods performed based on such acquired data are known, such as those disclosed in JP-A No. 2019-12481 and JP-A No. 2020-95403, for example. The diagnostic section 204 determines whether or not the speed of the vehicle 20 has exceeded a speed limit based on information related to a speed limit of each road included in map data recorded in the storage 21D, the position data of the vehicle 20 and acquired data of the wheel speed sensor 22. The result information related to a speed limit violation is sometimes called speed limit violation data.

Furthermore, the diagnostic section 204 determines whether or not the vehicle 20 has performed a sudden acceleration action based on the acquired data of the accelerator position sensor 23 and the acquired data of the wheel speed sensor 22. Furthermore, the diagnostic section 204 determines whether or not the vehicle 20 has performed a sudden braking action based on the acquired data of the brake force sensor 24 and the acquired data of the wheel speed sensor 22.

When the PCS control section 201 has performed a PCS operation, the diagnostic section 204 generates PCS operation data representing this occurrence. Furthermore, when the arousal estimation section 202 has determined that the driver Dr is falling asleep at the wheel, the diagnostic section 204 generates falling asleep determination data to express this occurrence.

Result information of driving diagnosis based on the acquired data of the wheel speed sensor 22, the accelerator position sensor 23, and the brake force sensor 24, and PCS operation data and falling asleep determination data are all result information of real time driving diagnosis. Note that such result information is recorded in the storage 21D together with position data and time stamp information.

Note that the real time driving diagnosis is executed by the diagnostic section 204 based on the acquired data of the wheel speed sensor 22, the accelerator position sensor 23, and the brake force sensor 24 that has been acquired at the first frequency mentioned above. This means that a diagnosis precision of speed limit diagnosis, sudden acceleration diagnosis, and sudden braking diagnosis by the diagnostic section 204 is higher than it would be were it to be based on acquired data that had been acquired at a lower frequency than the first frequency.

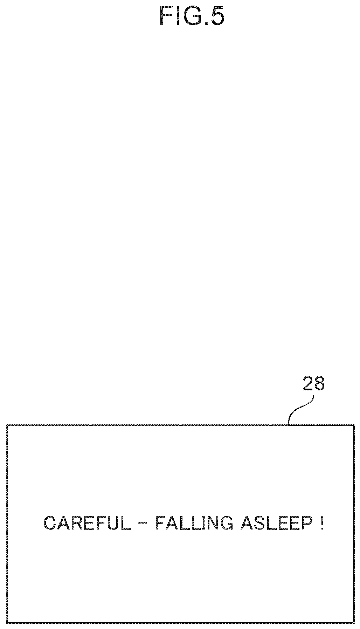

The display control section 205 controls the display 28. The display 28 controlled by the display control section 205 displays, for example, the result information of real time driving diagnosis on the display 28 for a fixed period of time immediately after a diagnosis action of the diagnostic section 204. This fixed period of time is, for example, 5 seconds. For example, when the diagnostic section 204 has generated falling asleep determination data, as illustrated in Fig. 5, a video (omitted from illustration) capturing the face of the driver Dr as acquired by the vehicle interior camera 26B when falling asleep was determined is displayed on the display 28 together with text of "CAREFUL - FALLING ASLEEP!".

Moreover, when the diagnostic section 204 has generate PCS operation data, a video (hereafter referred to as a vehicle surroundings video; omitted from illustration) acquired by the forward looking camera 26A when the PCS was operated is displayed on the display 28 together with text of "PCS OPERATION".

Furthermore, when the diagnostic section 204 has determined that the speed of the vehicle 20 has exceeded the speed limit, the vehicle surroundings video captured when the speed limit was exceeded is displayed on the display 28 together with text of "SPEED LIMIT VIOLATION". Furthermore, when the diagnostic section 204 has determined that "the vehicle 20 has performed a sudden acceleration action", the vehicle surroundings video captured when the sudden acceleration action was executed is displayed on the display 28 together with text of "SUDDEN ACCELERATION". Moreover, when the diagnostic section 204 has determined that "the vehicle 20 has performed a sudden braking action", the vehicle surroundings video captured when the sudden braking action was executed is displayed on the display 28 together with text of "SUDDEN BRAKING".

The communication control section 206 controls the communication I/F 21E. The communication I/F 21E controlled by the communication control section 206 wirelessly transmits vehicle related information corresponding to second data and third data recorded in the storage 21D, together with falling asleep determination data, speed limit violation data, and PCS operation data, to the external server 30 every time a specific data recording duration elapses. Namely, the communication I/F 21E transmits a data recording duration's worth of data recorded in the storage 21D as a package wirelessly to the external server 30. The data recording duration is, for example, a 10 minute duration. Note that the communication I/F 21E of the present exemplary embodiment transmits the second data and third data recorded in the storage 21D wirelessly to the external server 30 while thinning the data. Namely, the second data and third data wirelessly transmitted by the communication I/F 21E is acquired data that has been acquired by the information acquisition section at a second frequency that is a frequency of a second threshold or lower. The second threshold is a value smaller than the first threshold and is, for example, 1/10 of a second. This means that the data volume of the vehicle related information the communication I/F 21E wirelessly transmits to the external server 30 is a smaller volume than for un-thinned data.

As illustrated in Fig. 2, the external server 30 is configured including a CPU 31A, ROM 31B, RAM 31C, storage 31D, a communication I/F 31E, and an input/output I/F 31F. The CPU 31A, ROM 31B, RAM 31C, storage 31D, a communication I/F 31E, and an input/output I/F 31F are connected to a bus 31Z so as to be capable of communicating with each other. The CPU 31A, ROM 31B, RAM 31C, storage 31D, a communication I/F 31E, and an input/output I/F 31F include functions respectively corresponding to those of the CPU 21A, ROM 21B, RAM 21C, storage 21D, communication I/F 21E, and input/output I/F 21F. However, the processing power of the CPU 31A is higher than that of the CPU 21A. Note that map data is recorded in the storage 31D.

Furthermore, the external server 30 receives certification from an insurance company managing the server 50. Namely, this insurance company certifies that the result information of the normal driving diagnosis executed by the external server 30 is utilizable by an insurance company to design of an insurance product. In other words, the insurance company, certifies that the processing power and security level of the external server 30 satisfies required conditions.

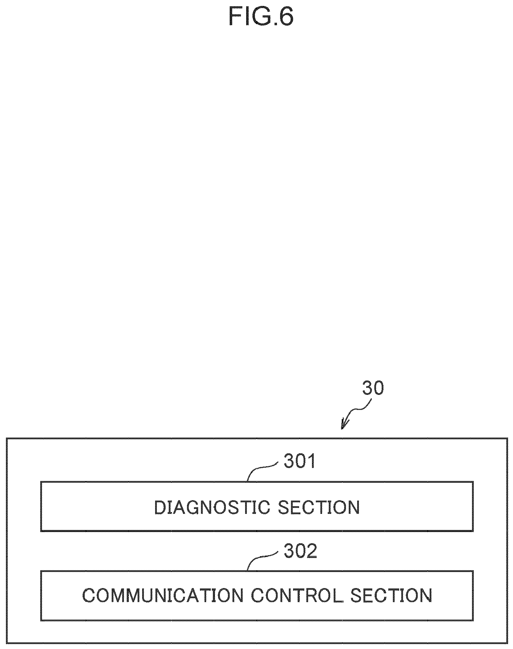

An example of a functional configuration of the external server 30 is illustrated in the block diagram of Fig. 6. The external server 30 includes, as functional configuration, a diagnostic section 301 and a communication control section 302. This functional configuration is implemented by the CPU 31A reading a program stored in the ROM 31B and executing the program.

The diagnostic section 301 performs normal driving diagnosis that is a type of driving diagnostic based on the second data received by the communication I/F 31E from the vehicle 20. Note that, as described later, the diagnostic content of the insurance-use driving diagnosis is included in the diagnostic content of normal driving diagnosis. The third data of the present exemplary embodiment is accordingly also second data. The diagnostic section 301 performs normal driving diagnosis while executing machine learning. Namely, the diagnostic section 301 diagnoses the driving operation of the driver Dr based on both the vehicle related information acquired from the vehicle 20 driven by the driver Dr over a long period of time, and result information of normal driving diagnosis for many drivers other than the driver Dr. The method for normal driving diagnosis of the present disclosure is, however, not limited thereto, and any method may be employed therefor.

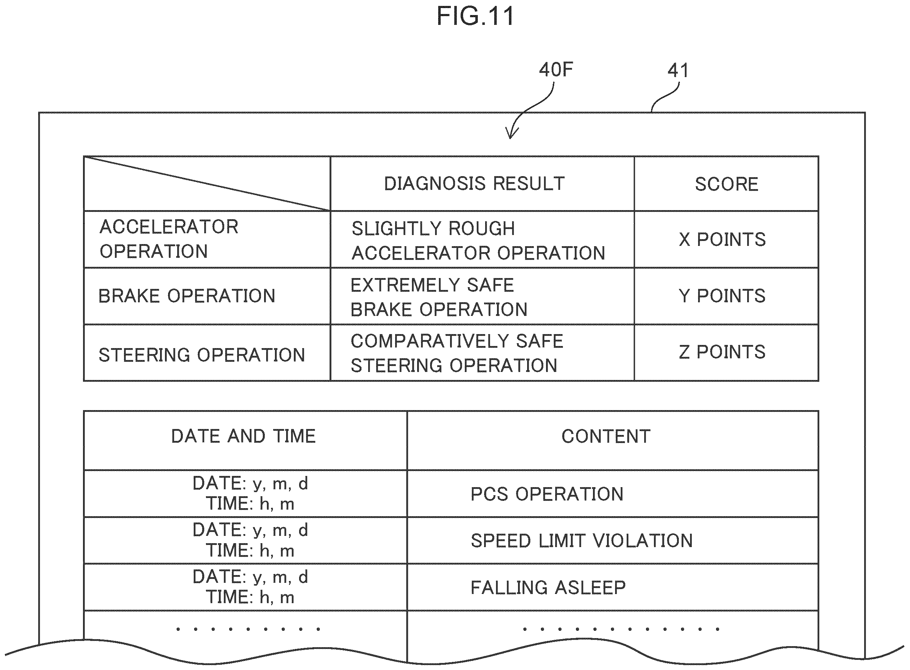

The normal driving diagnosis performed by the diagnostic section 301 encompasses driving diagnosis related to accelerator operation, brake operation, and steering operation. The diagnostic section 301 performs driving diagnostic for accelerator operation based on the acquired data of the accelerator position sensor 23 and the acquired data of the wheel speed sensor 22, performs driving diagnosis for brake operation based on the acquired data of the brake force sensor 24 and acquired data of the wheel speed sensor 22, and performs driving diagnosis for steering operation based on acquired data of the steering angle sensor 25. The diagnosis results thereof include information expressing a driving operation style of the driver Dr as obtained based on machine learning. Furthermore, the diagnostic section 301 computes a score for the accelerator operation, brake operation, and steering operation based on these diagnosis results (see Fig. 11).

Furthermore, the normal driving diagnosis executed by the diagnostic section 301 includes falling asleep determination data, speed limit violation data, and PCS operation data received by the external server 30 from the vehicle 20. Namely, the diagnostic section 301 generates result information 40F (see Fig. 11) for normal driving diagnosis by appending the falling asleep determination data, the speed limit violation data, and the PCS operation data to the driving diagnosis based on the accelerator operation, brake operation, and steering operation.

The diagnostic section 301 executes insurance-use driving diagnosis by removing the falling asleep determination data, speed limit violation data, and PCS operation data from the normal driving diagnosis. Namely, the result information of the insurance-use driving diagnosis (particular result information) includes only the results of driving diagnosis executed by the external server 30 certified by the insurance company. Namely, the insurance-use driving diagnosis result information does not include result information of real time driving diagnosis generated by the ECU 21 that is not certified by the insurance company. The result information of the normal driving diagnosis and the insurance-use driving diagnosis is recorded in the storage 31D.

The communication control section 302 controls the communication I/F 31E. The storage 31D is recorded with data including the vehicle related information, the falling asleep determination data, the speed limit violation data, and the PCS operation data received by the communication I/F 31E from the vehicle 20. The communication I/F 31E transmits the normal driving diagnosis result information recorded in the storage 31D to the portable terminal 40. Furthermore, the communication I/F 31E transmits the insurance-use driving diagnosis result information recorded in the storage 31D to the server 50.

The server 50 includes a hardware configuration similar to that of the external server 30. This means that the insurance-use driving diagnosis result information received by the communication I/F of the server 50 is recorded in the storage of the server 50.

The portable terminal 40 illustrated in Fig. 1 is configured including a CPU, ROM, RAM, storage, a communication I/F, and an input/output I/F. The portable terminal 40 is, for example, a smartphone or a tablet computer. The CPU, ROM, RAM, storage, communication I/F, and input/output I/F of the portable terminal 40 are connected to a bus so as to be capable of communicating with each other. The portable terminal 40 is able to acquire information related to the date and time from a timer (omitted from illustration). The display 41 including a touch panel is provided to the portable terminal 40. As illustrated in Fig. 1, the portable terminal 40 is carried by the driver Dr. A specific driving information display application is installed in the portable terminal 40. Furthermore, map data is also recorded in the storage of the portable terminal 40.

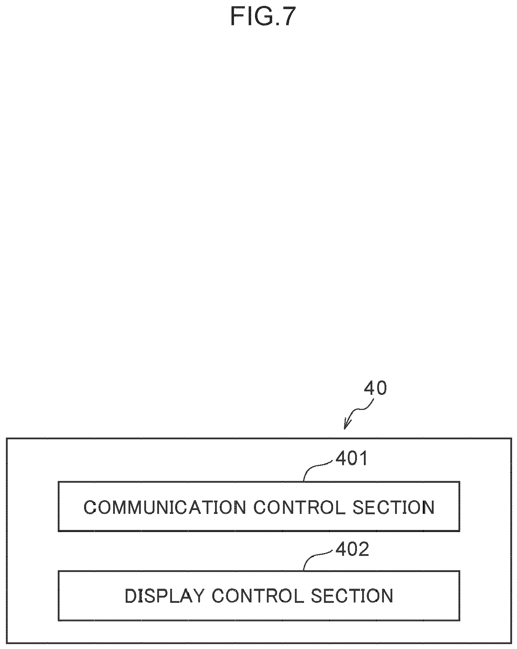

Fig. 7 is a block diagram illustrating an example of a functional configuration of the portable terminal 40. The portable terminal 40 includes, as functional configuration, a communication control section 401 and a display control section 402. The communication control section 401 and the display control section 402 are implemented by the CPU reading a program stored in the ROM and executing the program.

The communication control section 401 controls the communication I/F.

The display control section 402 controls the display 41. Namely, the display control section 402, for example, displays on the display 41 information received by the portable terminal 40 from the vehicle 20 or from the external server 30 and displays information input through the touch panel. The information input using the touch panel of the display 41 is, for example, able to be transmitted by the communication I/F to the vehicle 20 and/or the external server 30.

### Operation and Advantageous Effects

Next, description follows regarding operation and advantageous effects of the present exemplary embodiment.

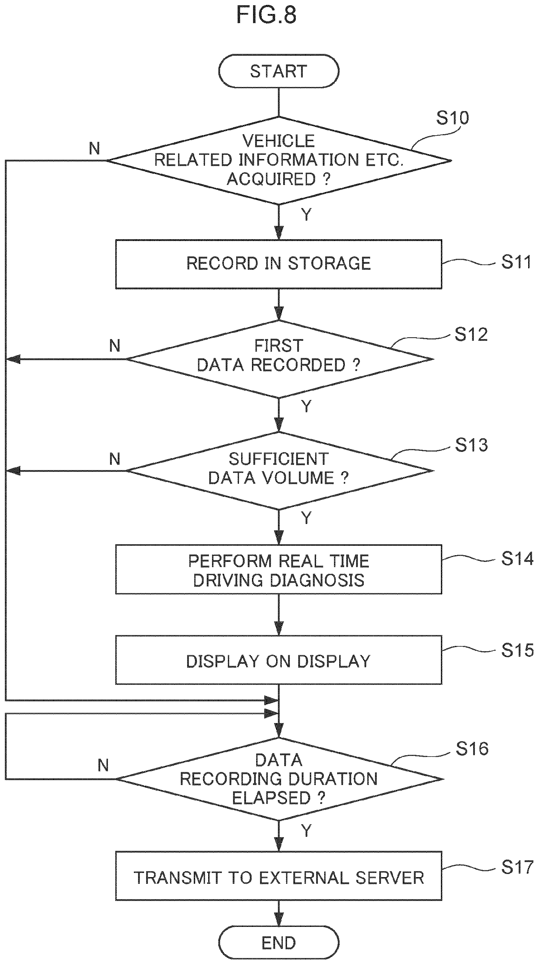

First description follows regarding a flow of processing performed by the CPU 21A of the vehicle 20, with reference to the flowchart of Fig. 8. The CPU 21A repeatedly executes the processing of the flowchart of Fig. 8 every time a specific period of time elapses. Note that in the following description the processing of each flowchart in Fig. 8 to Fig. 10 is executed by a single processor (CPU), however the processing of each flowchart in Fig. 8 to Fig. 10 may be executed by plural processors (CPUs).

At step S10 (hereafter "step" is abbreviated) the CPU 21A determines whether or not at least one from out of the vehicle related information, the PCS operation data, or the falling asleep determination data has been acquired.

When determined Yes at S10, the CPU 21A proceeds to S11, and records the acquired information (data) in the storage 21D.

The CPU 21A then continues by proceeding to S12, and determines whether or not first data is included in the vehicle related information recorded in the storage 21D.

When determined Yes at S12, the CPU 21A proceeds to S13 and determines whether or not a sufficient volume of first data to execute a real time driving diagnosis has been recorded in the storage 21D.

When determined Yes at S13, the CPU 21A proceeds to S14 and executes the real time driving diagnosis.

The CPU 21A then continues by proceeding to S15, and displays result information of the real time driving diagnosis on the display 28.

When determined No at S10, S12, S13 or when the processing of S15 has finished, the CPU 21A proceeds to S16 and determines whether or not a data recording duration has elapsed. The CPU 21A repeatedly executes the processing of S16 until Yes is determined thereat.

When determined Yes at S16, the CPU 21A proceeds to S17, and wirelessly transmits, to the external server 30, second data (third data) included in the vehicle related information, falling asleep determination data, speed limit violation data, and PCS operation data. Such data has been recorded on the storage 21D during the data recording duration.

When the processing of S17 has ended, the CPU 21A temporarily ends the processing of the flowchart of Fig. 8.

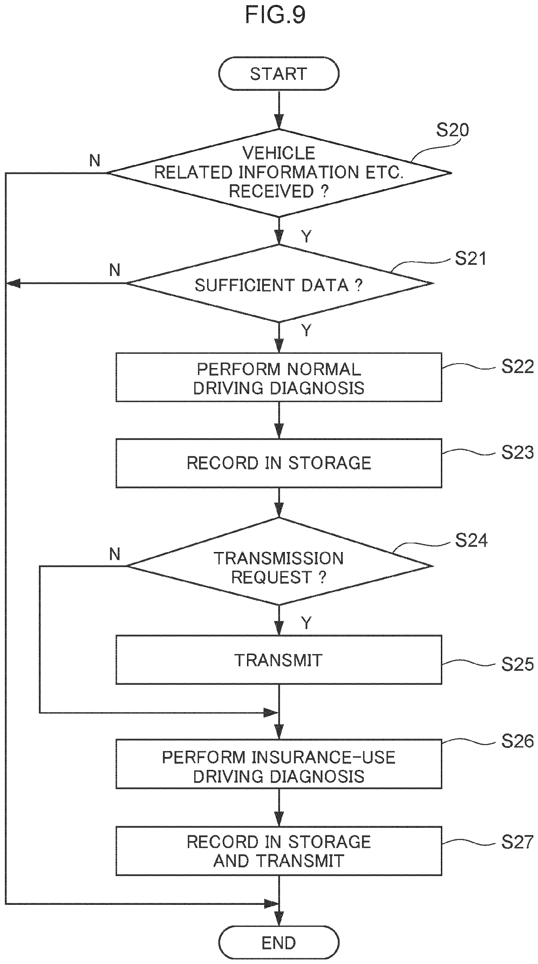

Next description follows regarding a flow of processing performed by the CPU 31A of the external server 30, with reference to the flowchart of Fig. 9. The CPU 31A repeatedly executes the processing of the flowchart of Fig. 9 every time a specific period of time has elapsed.

First at S20 the CPU 31A determines whether or not at least one out of the vehicle related information (second data, third data), the falling asleep determination data, the speed limit violation data, or the PCS operation data has been received from the vehicle 20.

When determined Yes at S20, the CPU 31A proceeds to S21, and determines whether or not a sufficient volume of the second data to execute a normal driving diagnosis has been recorded in the storage 21D. Note that the volume of data required to determine Yes at S21 is much greater than the volume of data required to determine Yes at S13. Namely, a normal driving diagnosis is executed using more data than in a real time driving diagnosis.

When determined Yes at S21 the CPU 31A proceeds to S22 and executes the normal driving diagnosis.

The CPU 31A then continues by proceeding to S23, and records result information of the normal driving diagnosis in the storage 21D.

The CPU 31A then continues by proceeding to S24, and determines whether or not a transmission request has been received from the portable terminal 40. While the driving information display application has been started up on the portable terminal 40, the portable terminal 40 wirelessly transmits a transmission request to the external server 30 every time a specific period of time has elapsed.

When determined Yes at S24, the CPU 31A proceeds to S25 and wirelessly transmits result information of the normal driving diagnosis to the portable terminal 40.

The CPU 31A then continues by proceeding to S26, and executes an insurance-use driving diagnosis based on the normal driving diagnosis result information.

The CPU 31A then continues by proceeding to S27, and records the insurance-use driving diagnosis result information in the storage 21D and wirelessly transmits this information to the server 50.

When determined No at S20, S21, or when the processing of S27 has ended, the CPU 31A temporarily ends the processing of the flowchart of Fig. 9.

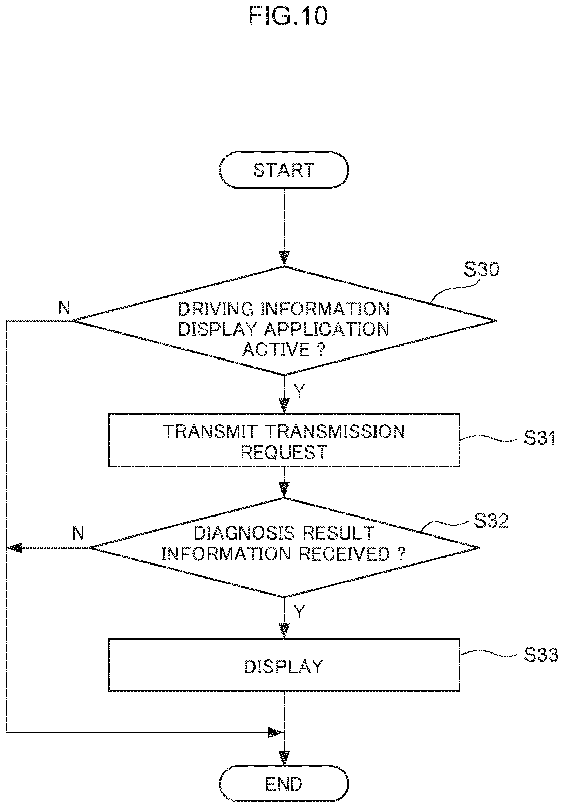

Next description follows regarding a flow of processing performed by the CPU of the portable terminal 40, with reference to the flowchart of Fig. 10. The CPU repeatedly executes the processing of the flowchart of Fig. 10 every time a specific period of time elapses.

First at S30, the CPU determines whether or not the driving information display application is active.

When determined Yes at S30 the CPU proceeding to S31 and wirelessly transmits a transmission request to the external server 30.

The CPU then continues by proceeding to S32, and determines whether or not normal driving diagnosis result information has been received from the external server 30.

When determined Yes at S32, the CPU proceeds to S33 and displays the result information 40F on the display 41 (see Fig. 11).

When the processing of S33 is ended, or when determined No at S30 or S32, the CPU temporarily ends the processing of the flowchart of Fig. 10.

In the system 10 of the present exemplary embodiment as described above, the vehicle related information acquired by the information acquisition section is transmitted to at least one out of the ECU 21 or the external server 30 based on the mode of driving diagnosis. In other words, the transmission destination of the vehicle related information is decided based on at least one out of a classification of output destination of the driving diagnosis result information, a classification of the driving diagnosis (classification of result information), or a classification of the vehicle related information.

For example, the vehicle related information (first data) for executing real time driving diagnosis having the display 28 as an output destination is transmitted to the ECU 21 (the CPU 21A). This accordingly enables the result information of the real time driving diagnosis generated by the ECU 21 to be quickly displayed on the display 28. Namely the result information can be displayed more quickly on the display 28 than in cases in which, for example, driving diagnosis is performed by the external server 30 based on the vehicle related information received from the vehicle 20 and the driving diagnosis result information is then wirelessly transmitted by the external server 30 to the vehicle 20. Thus the driver Dr is able to immediately check result information caused by the driver's own driving operation by looking at the display 28. Namely, were the driver Dr to have performed a problematic driving operation then they would be able to immediately check this.

Furthermore, vehicle related information (second data) for executing normal driving diagnosis for which the output destination is the portable terminal 40 is transmitted to the external server 30. The driver Dr is accordingly able to check the normal driving diagnosis result information generated by the external server 30 by, for example, looking at the display 41 of the portable terminal 40 after driving of the vehicle 20 has ended. Furthermore, a normal driving diagnosis is executed using more data than in a real time driving diagnosis and is executed by utilizing machine learning, resulting in a high reliability of normal driving diagnosis.

Furthermore, the vehicle related information (third data) for executing the insurance-use driving diagnosis is transmitted to the external server 30 that has received certification from the insurance company, and the insurance-use driving diagnosis is executed by the external server 30. Namely, in cases in which the driving diagnostic classification is insurance-use driving diagnosis, the vehicle related information (third data) is transmitted to the external server 30 that has received certification from the insurance company. The insurance company that has received the insurance-use driving diagnosis result information is thereby able to design an insurance product based on reliable result information.

Moreover, although the vehicle surroundings image data and the face image data that are vehicle related information having a high data volume are transmitted to the ECU 21, they are not wirelessly transmitted to the external server 30. The wireless communication load between the vehicle 20 and the external server 30 can accordingly be reduced.

In this manner the system 10 is able to transmit vehicle related information to plural driving diagnostic sections (the ECU 21, the external server 30) while taking into consideration various conditions related to driving diagnostics.

Furthermore, the vehicle related information acquired at the first frequency that is a frequency of the first threshold or higher is only transmitted to the ECU 21, and is not transmitted to the external server 30. This accordingly enables the data volume of vehicle related information being wirelessly transmitted from the vehicle 20 to the external server 30 to be suppressed.

Furthermore, some of the result information generated by the ECU 21 (the falling asleep determination data, the speed limit violation data, and the PCS operation data) is transmitted from the vehicle 20 to the external server 30, and the external server 30 performs normal driving diagnosis utilizing this result information. Thus the external server 30 is able to execute the normal driving diagnosis without duplicating the content of driving diagnosis by the ECU 21.

Furthermore, the administrator of the external server 30 or the driver Dr is able to freely change the content of the data classification list 29. This means that, for example, in cases in which the driver Dr desires that real time driving diagnosis result information is not shown on the display 28, the administrator or the driver Dr may update the content of the data classification list 29 so as not to include first data. Moreover, for example, in cases in which the insurance company desires to include falling asleep determination data in the insurance-use driving diagnosis, the content of the data classification list 29 may be updated such that face image data also falls in the category of third data, and a function corresponding to that of the arousal estimation section 202 may be provided in the external server 30.

Although a description has been given above regarding a driving diagnostic device, a system, and a driving diagnostic method according to the above exemplary embodiment, appropriate design modifications may be made thereto within a range not departing from the spirit of the present disclosure.

For example, the design of the vehicle 20 may be modified such that the real time driving diagnosis result information is not displayed on the display 28. Such a design modification is, for example, executable by utilizing the display 28 (touch panel).

The driving diagnostic may be performed by the ECU 21 and the external server 30 so that there is duplication in content between the ECU 21 and the external server 30. For example, in cases in which an insurance company desires speed limit violation data to be included in the insurance-use driving diagnosis, a configuration may be adopted in which the acquired data of the wheel speed sensor 22 received from the vehicle 20 and position data of the vehicle 20 received from the vehicle 20 and map data is utilized by the external server 30 to generate speed limit violation data, and this speed limit violation data is included in the result information of insurance-use driving diagnosis.

The vehicle 20 may also transmit either or both out of the vehicle surroundings image data or the face image data wirelessly to the external server 30. However, in such cases the image data is preferably wirelessly transmitted to the external server 30 after the ECU 21 has compressed the image data volume. Adopting such an approach enables the external server 30 to execute the normal driving diagnosis and the insurance-use driving diagnosis while using image data.

The insurance company may certify the vehicle 20 (the ECU 21). Adopting such an approach enables the result information of the real time driving diagnosis generated by the ECU 21 to be included in the insurance-use driving diagnosis.

Furthermore, information (recommendation information) related to a vehicle (vehicle type) that the external server 30 has determined to have good compatibility to driver Dr based on the diagnosis result may be included in the result information of normal driving diagnosis generated by the external server 30. Adopting such an approach enables the driver Dr who has looked at the display 41 of the portable terminal 40 to be notified of a vehicle that the driver would find easy to drive.

Result information of the real time driving diagnosis may also be displayed on the display 41 of the portable terminal 40 positioned inside the vehicle 20.

The various driving diagnosis result information may also be output as audio. For example, the real time driving diagnosis result information may be output from a speaker (omitted from illustration) provided to the vehicle 20.

## Claims

1. A driving diagnostic device comprising:
an information acquisition section configured to acquire vehicle related information related to a vehicle, and
a transmission section configured to wirelessly transmit the vehicle related information to a first driving diagnostic section that is provided not in the vehicle and that is configured to perform a first driving diagnosis of the vehicle using the vehicle related information acquired from the information acquisition section, and configured to transmit the vehicle related information to a second driving diagnostic section that is provided in the vehicle and that performs a second driving diagnosis of the vehicle using the vehicle related information acquired from the information acquisition section, by utilizing a network of the vehicle;
wherein a transmission destination of the vehicle related information by the transmission section is decided among the first driving diagnostic section and the second driving diagnostic section based on a mode of the first driving diagnosis and the second driving diagnosis.

2. The driving diagnostic device of claim 1, wherein:
the transmission destination of the vehicle related information by the transmission section is decided among the first driving diagnostic section and the second driving diagnostic section based on at least one of a classification of an output destination of result information of the first driving diagnosis and the second driving diagnosis, a classification of the result information, or a classification of the vehicle related information.

3. The driving diagnostic device of claim 2, wherein the transmission section transmits the vehicle related information required for the second driving diagnosis to the second driving diagnostic section, the output destination of the result information of the second driving diagnosis being a display provided at the vehicle.

4. The driving diagnostic device of claim 2 or 3, wherein the transmission section transmits the vehicle related information required for the first driving diagnosis to the first driving diagnostic section, the output destination of the result information of the first driving diagnosis being a portable terminal capable of communicating wirelessly with the first driving diagnostic section.

5. The driving diagnostic device of claim 2 or 3, wherein at least one of the first driving diagnostic section or the second driving diagnostic section is a particular driving diagnostic section capable of executing a driving diagnosis to generate particular result information that is result information for an insurance company to utilize to design an insurance product, the particular driving diagnostic section also being certified by the insurance company,
the transmission section transmits the vehicle related information required for the second driving diagnosis to generate the particular result information to the particular driving diagnostic section.

6. The driving diagnostic device of claim 2 or 3, wherein:
the first driving diagnostic section is capable of executing the first driving diagnosis with machine learning; and
the transmission section transmits the vehicle related information required for the first driving diagnosis with the machine learning to the first driving diagnostic section.

7. The driving diagnostic device of claim 1 or 2, wherein the transmission section transmits the vehicle related information to the second driving diagnostic section, the vehicle related information being acquired by the information acquisition section at an acquisition frequency of a first threshold or higher.

8. The driving diagnostic device of claim 1 or 2, wherein the transmission section transmits some result information of the second driving diagnosis to the first driving diagnostic section.

9. A driving diagnostic system comprising:
an information acquisition section configured to acquire vehicle related information related to a vehicle;
a first driving diagnostic section provided not in the vehicle and configured to perform a first driving diagnosis of the vehicle using the vehicle related information acquired from the information acquisition section;
a second driving diagnostic section provided at the vehicle and configured to execute a second driving diagnosis of the vehicle using the vehicle related information acquired from the information acquisition section; and
a transmission section configured to wirelessly transmit the vehicle related information to the first driving diagnostic section and configured to transmit the vehicle related information to the second driving diagnostic section utilizing a network of the vehicle,
wherein a transmission destination of the vehicle related information by the transmission section is decided among the first driving diagnostic section and the second driving diagnostic section based on a mode of the first driving diagnosis and the second driving diagnosis.

10. A driving diagnostic method comprising:
a step of acquiring vehicle related information related to a vehicle;
a step of deciding whether:
the vehicle related information should be wirelessly transmitted to a first driving diagnostic section that is provided not in the vehicle and that is configured to perform a first driving diagnosis of the vehicle using the vehicle related information, or
the vehicle related information should be transmitted to a second driving diagnostic section that is provided in the vehicle and that is configured to perform a second driving diagnosis of the vehicle using the vehicle related information, by utilizing a network of the vehicle,
based on a mode of the first driving diagnosis and the second driving diagnosis; and
a step of transmitting the vehicle related information to at least one of the first driving diagnostic section that has been decided to be a transmission destination of the vehicle related information or the second driving diagnostic section that has been decided to be a transmission destination of the vehicle related information.
